Europäisches Patentamt

European Patent Office

Office européen des brevets

(11) Numéro de publication: **0 275 225**
**A1**

(12) **DEMANDE DE BREVET EUROPEEN**

(21) Numéro de dépôt: 88400069.6

(22) Date de dépôt: 14.01.88

(51) Int. Cl.⁴: **B 01 J 4/00**
B 01 J 6/00, F 27 D 3/14,
B 01 F 3/08, B 01 F 15/04,
G 01 F 11/00
// A61K9/10

(30) Priorité: 16.01.87 FR 8700442

(43) Date de publication de la demande:
20.07.88 Bulletin 88/29

(84) Etats contractants désignés:
AT BE CH DE ES FR GB GR IT LI LU NL SE

(71) Demandeur: Wenmaekers, Paul
22 bis, Avenue de Suffren
F-75015 Paris (FR)

(72) Inventeur: Wenmaekers, Paul
22 bis, Avenue de Suffren
F-75015 Paris (FR)

(74) Mandataire: Martin, Jean-Jacques et al
Cabinet REGIMBEAU 26, Avenue Kléber
F-75116 Paris (FR)

(54) **Fondoir-doseur de haute précision pour matériau fusible ou liquide.**

(57) L'invention concerne un fondoir-doseur pour matériau fusible ou liquide.

Le fondoir-doseur comprend un réservoir four (1) permettant de chauffer le matériau pour amener celui-ci à l'état fondu ou liquide. Il comprend en outre une buse d'admission (10) et une buse de prélèvement (11) d'un fluide de flottage du matériau fusible ou liquide, les buses (10,11) étant disposées à la base du réservoir-four (1). Le réservoir-four comprend également des moyens (2) de prélèvement par débordement du matériau fusible fondu ou liquide et des moyens (3) de protection des moyens (2) de prélèvement par débordement permettant d'empêcher l'occultation de ces derniers par le matériau fusible non fondu.

Application aux dispositifs de fabrication d'émulsion en continu entrant dans la composition de produits pharmaceutiques et/ou alimentaires.

FIG. 1

EP 0 275 225 A1

Bundesdruckerei Berlin

**Description**

FONDOIR-DOSEUR DE HAUTE PRECISION POUR MATERIAU FUSIBLE OU LIQUIDE.

L'invention concerne un fondoir-doseur de précision pour matériau fusible ou liquide.

Les fondoirs-doseurs de précision sont actuellement utilisés pour la préparation et le dosage de corps ou matériaux fusibles ou liquides pour la préparation à l'échelle industrielle d'émulsions entrant dans la composition de produits pharmaceutiques ou alimentaires.

Un procédé et un dispositif de fabrication en continu de grande précision, procédé et dispositif informatisés, pour la fabrication de produits pharmaceutiques de grande notoriété connu sous la marque de commerce déposée "BIAFINE" ont été décrits dans la demande de brevet français 85 02241 déposée le 15 février 1985 au nom de la Demanderesse. Le procédé et le dispositif décrits dans la demande de brevet précitée permettent d'obtenir une production quasi continue du produit précité, le produit obtenu présentant un haut degré de qualité et d'homogénéité.

Dans le procédé et le dispositif décrits dans cette demande de brevet, la distribution des différents composants de l'émulsion est réalisée à partir de fondoirs de type classique, le dosage en proportion en masse de ces composants étant effectué au moyen d'un peson du type bascule électronique. Ce type de matériel, pour une utilisation en continu, nécessite cependant une surveillance très suivie des fondoirs de type classique et en particulier de la vitesse d'écoulement des produits fondus pour assurer la réalisation de coulées homogènes tant du point de vue de l'homogénéité des produits fondus que du temps nécessaire à la réalisation séquentielle des différentes étapes du procédé.

La présente invention a pour but la mise en oeuvre d'un fondoir-doseur susceptible d'être avantageusement utilisé dans le dispositif et le procédé décritsdans le demande de brevet précitée, une accélération du temps de fonte pour un fondoir intégralement chargé par des matériaux fusibles non fondus étant obtenue.

Un autre objet de la présente invention est la mise en oeuvre d'un fondoir-doseur permettant d'éviter tout risque de colmatage des conduits d'écoulement du matériau fondu, la vitesse d'écoulement et le temps nécessaire à la réalisation séquentielle de la distribution-dosage du matériau fondu étant de ce fait, pour un matériau donné, sensiblement homogénéisés.

Un autre objet de la présente invention est la mise en oeuvre d'un fondoir-doseur dans lequel une grande homogénéité du matériau fondu est obtenue du fait d'un chauffage à coeur du matériau.

Le fondoir-doseur pour matériau, fusible ou liquide objet de l'invention comporte un réservoir-four permettant de chauffer le matériau pour amener celui-ci à l'état fondu ou liquide. Il est remarquable en ce que le réservoir-four comprend en outre une buse d'admission et une buse de prélèvement d'un fluide de flottage du matériau fusible ou liquide, lesdites buses étant disposées à la base du réservoir-four, des moyens de prélèvement par débordement dudit matériau fusible fondu ou liquide et des moyens de protection desdits moyens de prélèvement par débordement permettant d'empêcher l'occultation de ces derniers par le matériau fusible non fondu.

L'invention trouve application pour le dosage de produits fusibles ou liquides et notamment dans les dispositifs ou installations de production en continu d'émulsions entrant dans la composition de produits pharmaceutiques ou alimentaires.

Elle sera mieux comprise à la lecture de la description et à l'observation des dessins ci-après, dans lesquels :

- la figure 1 représente en coupe partielle longitudinale, selon un plan de symétrie de révolution, un fondoir-doseur objet de l'invention,

- la figure 2a représente en coupe partielle selon un même plan de symétrie que relativement à la figure 1, un détail de réalisation avantageux du fondoir-doseur selon l'invention représenté en figure 1,

- la figure 2b représente une vue de dessus de la partie en coupe du fondoir-doseur selon l'invention représenté en figure 1,

- la figure 3a représente, en coupe partielle selon un même plan de symétrie que relativement à la figure 1, un mode de réalisation avantageux d'un fondoir-doseur plus spécialement adapté à une conduite automatique de l'opération de dosage,

- la figure 3b représente une vue détaillée du système de vanne de la figure 3a,

- la figure 4 représente en coupe longitudinale une vue d'un fondoir-doseur pour matériau solide, tel que des cires.

Selon un mode de réalisation avantageux :

- la figure 5 représente en coupe longitudinale une vue d'un fondoir-doseur pour matériau liquide ou visqueux, tel que des huiles particulièrement avantageux.

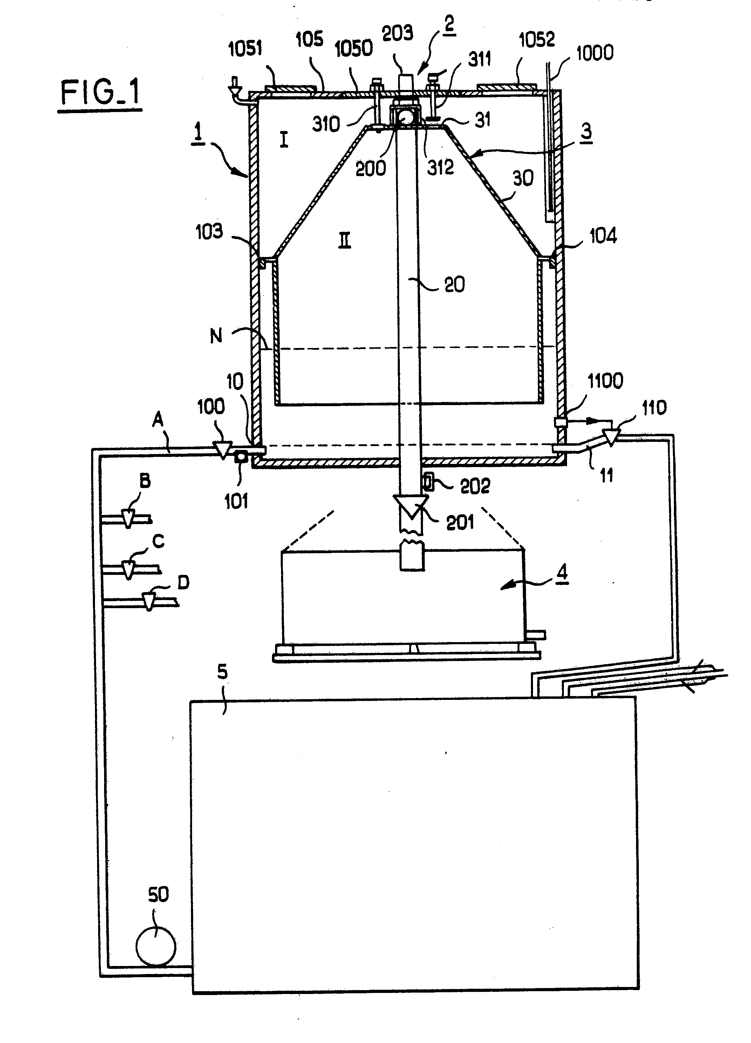

Le fondoir-doseur de matériau fusible ou liquide objet de l'invention, sera tout d'abord décrit conformément au mode de réalisation non limitatif, représenté en figure 1.

Ainsi qu'on le remarquera sur la figure précitée, le fondoir-doseur objet de l'invention comporte un réservoir-four, noté 1, permettant de chauffer le matériau pour amener celui-ci à l'état fondu ou liquide. Par matériau, on entend bien entendu un matériau fusible susceptible d'être rendu liquide par fusion ou un matériau liquide pour lequel il est nécessaire ou non d'élever la température moyenne de façon à obtenir un bon degré de fluidité du matériau considéré.

Dans la suite de la description, et en liaison avec la demande de brevet français no 85 02241 déjà citée, les matériaux fusibles considérés pourront, par exemple être des cires, des paraffines ou des huiles utilisées pour constituer des émulsions entrant dans la composition du produit pharmaceutique "BIAFINE" déjà cité. Bien entendu, d'autres matériaux liquides pour lesquels il n'est éventuellement pas nécessaire d'élever la température moyenne, peuvent être dosés au moyen du fondoir-doseur objet de l'invention.

Conformément à une caractéristique avantageuse du fondoir-doseur objet de l'invention, le réservoir four I est avantageusement constitué par une cuve fondoir à paroi et fond chauffants. La cuve à paroi et fond chauffants constitue ainsi un réservoir-four.

Le réservoir-four I précité comprend en outre une buse d'admission notée 10 et une buse de prélèvement notée 11 d'un fluide de flottage du matériau fusible ou liquide. Les buses d'admission 10 et de prélèvement 11 sont disposées à la base du réservoir four 1.

En outre, ainsi qu'on le remarquera en figure 1, des moyens 2 de prélèvement par débordement du matériau fusible fondu ou liquide sont prévus dans le réservoir four I. Des moyens 3 de protection des moyens 3 de prélèvement par débordement permettent alors d'empêcher l'occultation de ces derniers par le matériau fusible non fondu.

Selon un principe de fonctionnement général du fondoir-doseur objet de l'invention précédemment décrit en liaison avec la figure 1, le matériau fusible ou liquide peut être introduit dans le fondoir- doseur et en particulier dans le réservoir-four 1, et soumis à un chauffage par l'intermédiaire de ce dernier. En outre, un fluide de flottage est admis dans le fondoir-doseur par l'intermédiaire de la buse d'admission 10, de façon à amener progressivement le matériau fusible fondu ou liquide, par flottage, au niveau du moyen de prélèvement par débordement noté 2. Bien entendu, le fluide de flottage peut être choisi en fonction du matériau fusible fondu ou liquide considéré, de façon que la densité du fluide de flottage soit supérieure à celle du matériau fusible fondu ou liquide.

Ainsi qu'il apparaît en outre en figure 1, la buse d'admission 10 et la buse de prélèvement 11 du fluide de flottage comportent avantageusement une électrovanne notée 100, 110, permettant respectivement la commande d'admission et de prélèvement du fluide de flottage. Les électrovannes 100 et 110 sont des électrovannes normalement disponibles dans le commerce et par exemple, des électrovannes d'un type correspondant à celles utilisées dans le dispositif décrit dans la demande de brevet français no 85 02241 déjà citée.

Selon le mode de réalisation non limitatif du fondoir-doseur objet de l'invention représenté en figure 1, les moyens 2 de prélèvement par débordement du matériau fusible fondu ou liquide comprennent avantageusement un tube noté 20 traversant le réservoir-four 1. Le tube traversant 20 comporte, en sa partie supérieure, un orifice de débordement noté 200 permettat l'écoulement du matériau fusible fondu ou liquide dans le tube traversant 20, lorsque le niveau libre du matériau fusible fondu ou liquide atteint et dépasse le niveau bas de l'orifice de débordement 200 sur admission du fluide de flottage, ainsi que précédemment décrit. Ainsi qu'il apparaît en outre en figure 1, le tube traversant 20 est muni à l'extérieur du réservoir-four 1 d'une électrovanne de commande 201, permettant l'établissement ou l'arrêt d'écoulement du matériau fusible ou liquide pour assurer par gravité le prélèvement selon une quantité souhaitée du matériau fusible ou liquide. L'extrémté opposée du tube traversant 20 est munie, avantageusement, d'un obturateur noté 203, lequel est suceptible de permettre l'obturation de l'orifice de débordement 200, en position basse de l'obturateur 203.

Bien entendu, le tube 20 est dans sa partie extérieure au réservoir-four 1 connecté à un peson noté 4 ou à une cuve formant réservoir tampon pour le matériau fusible fondu ou liquide prélevé.

Ainsi qu'on le remarquera également en figure 1, les moyens 3 de protection des moyens de prélèvement 2 comportent avantageusement un élément 30 sensiblement tronconqiue présentant la forme d'une cloche . Cet élément sensiblement tronconique 30 est rendu solidaire de la paroi interne du réservoir-four 1, par des supports notés 103,104. Les supports précités peuvent avantageusement être prévus au nombre de trois, chaque support étant fixé à la paroi interne du réservoir-four. L'élément 30 sensiblement tronconique peut être ainsi posé sur les supports précités et fixé sur ces derniers, de façon à assurer une bonne mise en place et un bon maintien de l'élément 30 sensiblement tronconique dans le réservoir-four 1.

Selon une caractéristique avantageuse de l'élément 30 sensiblement tronconique, celui-ci est ouvert à sa partie supérieure et il permet de subdiviser le volume interne du réservoir-four 1 en un premier, noté I, et un deuxième, noté II, volume distincts. Les volumes distincts notés I et II sont délimités respectivement par la paroi interne du réservoir-four 1, le niveau N du fluide de flottage et la paroi extreme de l'élément 30 sensiblement tronconique et par la paroi interne de ce même élément tronconique 30 et le niveau de fluide de flottage N précédemment définis.

En outre, conformément à une autre caractéristique avantageuse du fondoir-doseur objet de l'invention, les moyens 3 de protectin comportent également un couvercle amovible 31 destiné à occulter la partie supérieure ouverte de l'élément tronconique 30. Le couvercle 31 comporte, ainsi que représente notamment en figure 1, des soupapes ou évents notés 310,311, susceptibles d'être commandés par des vérins. Le couvercle amovible 31 présente en outre une partie centrale rapportée notée 312, laquelle est destinée, lorsque le couvercle 31 est monté sur le tube traversant 20 à inclure l'orifice de débordement 200 dans le deuxième volume distinct II. Ainsi qu'il est représenté notamment sur la figure 1, la base de l'orifice de débordement 200 est située sensiblement au même niveau que l'ouverture des soupapes 310 et 311 ménagée dans le couvercle amovible 31.

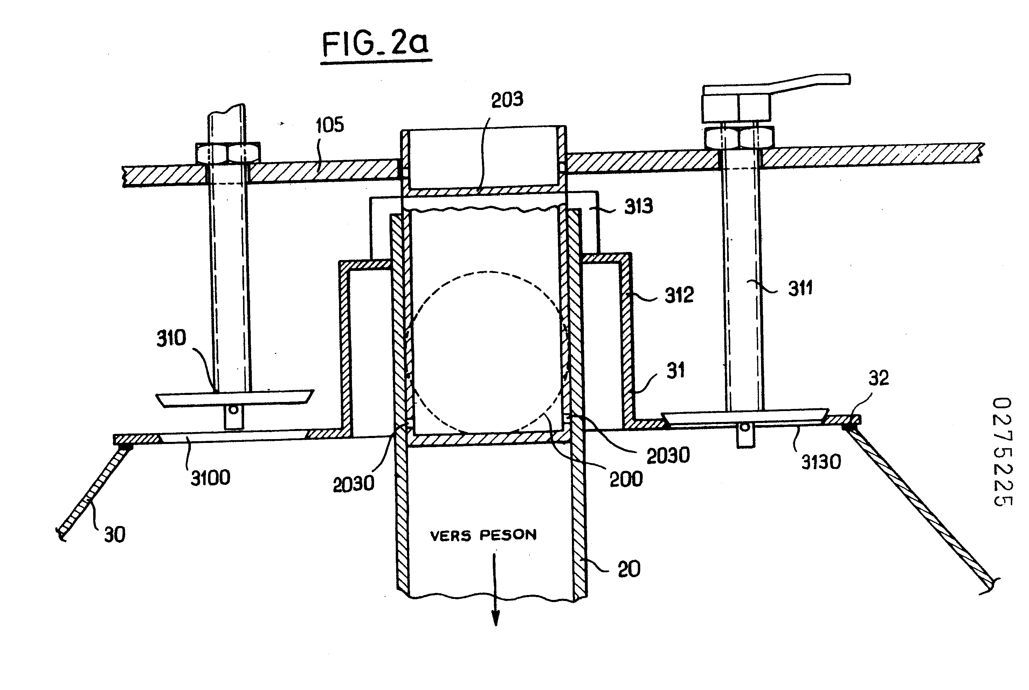

Une description plus détaillée du couvercle amovible 31 et de la fixation de celui-ci au niveau du tube traversant 20 sera donnée en liaison avec la figure 2a. Cette figure représente, selon un même plan de coupe que dans le cas de la figure 1, une vue agrandie du couvercle amovible 31 précité.

Selon cette figure, le couvercle 31 est monté sur le tube traversant 20 et est fixé à celui-ci au niveau de sa partie centrale rapportée 312, par l'intermédiaire d'un écrou 313. Dans ce but, le tube traversant 20 à son extrémité supérieure, peut être munie d'un filetage sur lequel l'écrou 313 peut être engagé. En outre, ainsi qu'il apparaît en figure 2a, les moyens d'obturation 203 peuvent être munis d'évents notés 2030, lesquels sur cette figure, sont représentés en position d'ouverture des moyens d'obtunation 203, l'orifice de débordement 200 étant ouvert, respectivement de fermeture, position basse des moyens d'obturation 230, l'orofice de débordement 200 étant fermé.

On notera également que les soupapes 310 et 311 peuvent avantageusement être commandées par des vérins hydrauliques ou mécaniques des orifices 3100, 3110 respectivement ménagés dans le couvercle amovible et, formant les soupages précédemment décrites. En outre, ainsi qu'il apparaît en figure 2a, le couvercle amovible 31 peut avantageusement être muni à sa périphérie d'un joint d'étanchéité 32, joint au silicone ou joint en matériau plastique, lequel permet d'assurer une bonne occultation de la partie supérieure ouverte de l'élément tronconique 30 précédemment décrit.

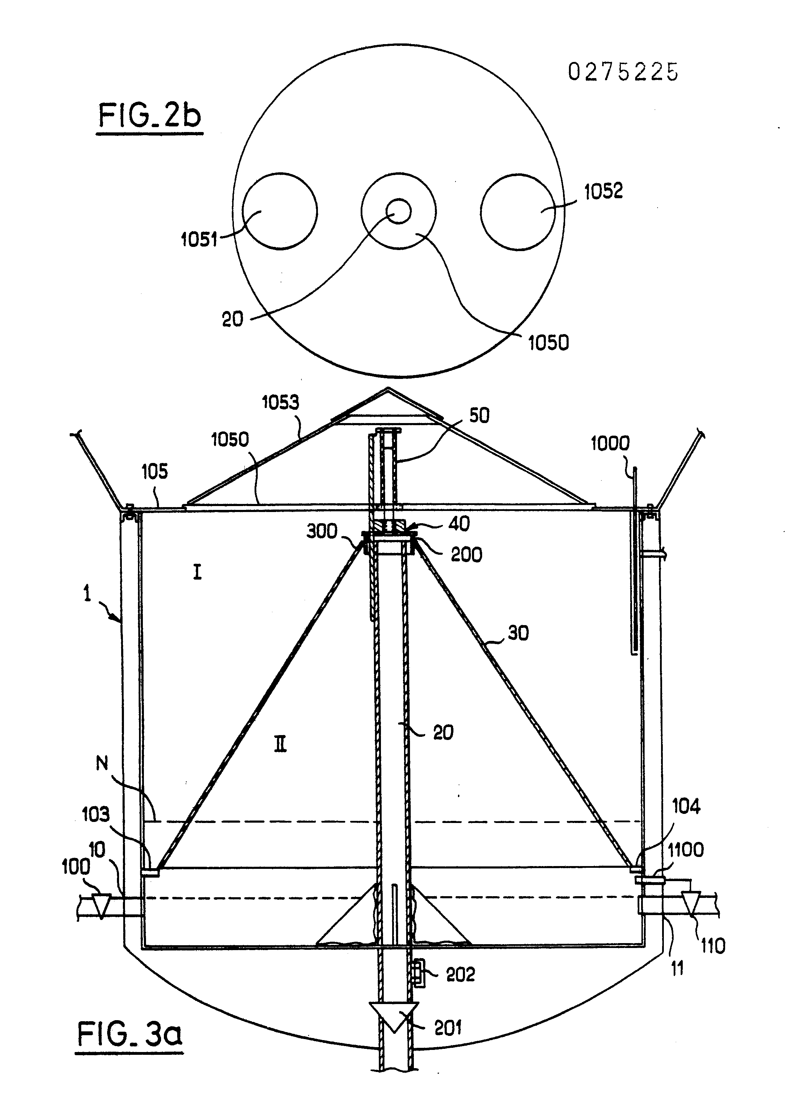

Ainsi qu'il apparaît en outre en figure 1, et de manière plus détaillée en vue de dessus en figure 2b, le réservoir-four 1 comporte à sa partie supérieure un couvercle 105 de fermeture du réservoir-four. Le couvercle 105 de fermeture est muni d'une part, d'un trou d'homme central dont l'élément de fermeture 1050 constitue le support des tiges de vérin 310, 311 actionnant les soupapes du couvercle amovible 31 de l'élément tronconique 30 et d'autre part, de deux trous d'homme périphériques notés 1051, 1052. L'élément de fermeture 1050 est engagé sur l'extrémité du tube traversant 20.

Selon une caractéristique avantageuse du fondoir-doseur objet de l'invention, l'élément sensiblement tronconique 30 et le couvercle amovible 31 peuvent être constitués en un matériau tel que l'acier inoxydable ou un matériau plastique dur tel que le polychlorure de vinyle PVC. Bien entendu, le réservoir 1 peut également être constitué de manière classique en un acier inoxydable. De préférence, on choisira un acier inoxydable tel qu'un acier vendu sous la marque commerciale "INOX 135" c'est-à-dire un acier résistant à l'eau déminéralisée.

Selon une caractéristique particulièrement avantageuse du fondoir-doseur objet de l'invention, le fluide de flottage est avantageusement constitué par un fluide caloporteur. La température du fluide admis dans le réservoir four 1 est alors voisine de la température de fusion du matériau fusible Le fluide caloporteur peut bien entendu être constitué par de l'eau déminéralisée et peut avantageusement provenir du bouilleur utilisé dans le dispositif de fabrication d'émulsion décrit dans la demande de brevet français no 85 02241 précédemment citée. L'eau déminéralisée est injectée à partir d'un réservoir noté 5 sur la figure 1, lequel réservoir peut être constitué par le bouilleur de l'installation ainsi que mentionné précédemment, et une pompe d'alimentation notée 50.

Conformément à une caractéristique particulière du fondoir-doseur objet de l'invention, celui-ci au niveau du réservoir-four 1 peut comprendre un flotteur noté 1000 indicateur du niveau supérieur du matériau fusible fondu ou liquide contenu dans le réservoir-four. Celui-ci peut consister naturellement en un flotter muni d'une tige graduée, laquelle est étalonnée en fonction de la hauteur au niveau suprieur du matériau fusible fondu ou liquide contenu dans le réservoir.

Selon une autre caractéristique particulitrement avantageuse du fondoir-doseur objet de l'invention, le réservoir-four 1 comporte en outre un détecteur noté 1100 du niveau de sépration matériau fusible fondu ou liquide - fluide de flottage, niveau de séparation noté N sur la figure 1. Le détecteur 1100 peut avantageusement être constitué par un détecteur de niveau de conductibilité électrique dans le cas où les matériaux fusibles utilisés sont des cires ou des paraffines, lesquelles présentent par rapport à l'eau déminéralisée, des niveaux de conductibilité très différents. Il peut également être constitué, à titre d'exemple non limitatif, en un détecteur optique permettant de déceler le niveau d'absorption différent entre l'eau démiéralisée et le matériau fusible fondu ou liquide.

Selon une caractéristique avantageuse du détecteur de niveau de séparation de matériau fusible fondu ou liquide et du fluide de flottage selon l'invention, celui-ci est susceptible de commander la fermeture de l'électrovanne 110 de prélèvement du fluide de flottage lors d'un abaissement correspondant du niveau de séparation. Un fonctionnement détaillé du fondoir-doseur objet de l'invention, tel que représenté et décrit précédemment en liaison avec les figures 1 et 2a, 2b, sera décrit en liaison avec les figures précitées.

Premier chargement en matériau fusible tel qu'une cire :
- après retrait de l'élément de fermeture 1050 du trou d'homme central, l'écrou 313 est ôté et le couvercle amovible 31 est enlevé, l'obturateur 203 étant mis en position basse pour obturer l'orifice de débordement 200. Le volume distinct noté II peut alors être rempli intégralement puis peut ensuite être refermé par remise en place du couvercle amovible 31 et fermeture des soupapes 310 et 311. Les trous d'homme périphériques 1051 et 1052 peuvent alors permettre le remplissage de l'autre volume distinct noté I. Bien entendu, préalablement à l'introduction du matériau fusible ou de la cire, un certain volume d'eau ou de fluide de flottage à été introduit dans le réservoir-four 1, de façon à définir le niveau de séparation N précédement décrit en liaison avec la figure 1. Le remplissage du volume distinct I peut, si désiré, être effectué jusqu'à hauteur du couvercle de fermeture 105.

Première fonte du matériau fusible tel qu'une cire :
- à l'état solide les matériaux fusibles tels que des cires, que celles-ci soient en plaque, en granulés, en poudre ou en copeaux occupent un volume très supérieur à celui qu'elles occuperont à l'état fondu. Il existe donc après chargement du fondoir-doseur, un grand réseau d'air constitué par la nature même du matériau, ce réseau d'air ralentissant fortement la fonte initiale.

Après avoir placé l'obturateur 203 en position d'obturation de l'orifice de débordement 200, le fluide de flottage tel que de l'eau déminéralisée est injecté dans le réservoir-four 1, le fluide de flottage étant ainsi que précédemment décrit, constitué par un fluide caloporteur à la température de fusion ou à une température voisine de celle-ci du matériau fusible considéré. L'injection de fluide ou d'eau déminéralisée est effectuée jusqu'a une valeur de surpression laquelle peut avantageusement être détectée par un détecteur de pression 101, disposé au voisinage de la buse d'admission de fluide 10. La détection de la surpression de fluide, par le détecteur de pression 101, permet d'arrêter, automatiquement, la pompe d'admission 50 par exemple. L'arrêt automatique de la pompe peut être effectué dans un dispositif tel que décrit dans la demande de brevet français no 85 02241, par l'intermédiaire d'un logiciel adapté à cet effet. Bien entendu, la commande d'arrêt d'admission de fluide peut également être effectuée manuellement.

Dès l'arrêt de la pompe d'admission 50, la pression de fluide à l'intérieur du réservoir-four 1 tombe et il est possible de visualiser la fonte des matériaux fusibles tels que les cires par les trous d'homme périphériques notés 1051 et 1052 par exemple.

Bien entendu, le processus d'injection du fluide de flottage, fluide caloporteur, peut être appliqué successivement à différents fondoirs chargés, lesquels bien entendu à titre de simplifcation n'ont pas été représentés en figure 1, les voies d'alimentation en fluide notées A pour le mode de réalisation de la figure 1, puis successivement B, C, D pour d'autres fondoirs-doseurs chargés de même type que celui représenté en figure 1, ayant seules été représenées. Le processus d'injection de fluide de flottage constituant fluide caloporteur est particulièrement avantageux en ce qu'il accélére considérablement laa fonte, en raison d'un chauffage à coeur de la charge en matériau fusible. Après la fonte du matériau fusible, le réservoir-four 1 comporte sensiblement deux niveaux, le niveau N de séparation du fluide de flottage et dun matériau fusible fondu et le niveau libre de ce dernier, lequel comporte le matériau fusible fondu tel que les cires précédemment décrites.

Selon une variante de mise en oeuvre de la première fonte du matériau fusible, dans le cas où l'on désire commencer rapidement les dosages par pesée à l'aide du peson 4, où dans le cas où l'on ne prévoit pas d'utiliser tout le volume du fondoir, on peut également ne charger que le volume distinct noté I, tout en injectant un maximum de volume de fluide de flottage constituant fluide caloporteur, afin d'accélérer la fonte.

Bien entendu, le fondoir-doseur tel que représenté en figure 1 est particulièrement bien adapté à un fonctionnement en continu ou en discontinu, ces opérations de recharge en continu par exemple, pouvant être effectuées au niveau des trous d'homme périphériques 1051 et 1052, par l'intermédiaire d'un distributeur de matériau fusible à l'état solide, distributeur tel qu'une trémie munie d'une vis sans fin par exemple.

Au départ d'une fabrication, une commande manuelle ou le logiciel précédemment décrits entraîne l'ouverture de la vanne de prélèvement de fluide 110 de façon à amener le niveau de fluide de flottage à l'intérieur du réservoir-four 1 à un niveau minimum. La vanne de prélèvement 110 se referme lorsque ce niveau est atteint, niveau détecté par le détecteur 1100 représenté sur la figure 1.

La fabrication peut alors démarrer.

Le peson fondoir 4 et son lecteur de pesée tels que décrits notamment dans la demande de brevet français 85 02214 précitée, permettent des commandes par l'intermédiaire du logiciel selon des pesées prédéterminées.

A titre d'exemple non limitatif, le fonctionnement décrit sera considéré dans le cas d'un seul fondoir-doseur tel que représenté en figure 1, mais il est bien entendu que plusieurs fondoirs-doseurs peuvent être utilisés.

Le logiciel peut alors commander la mise en marche de la pompe d'alimentation en fluide 50 et l'ouverture de la vanne d'admission 100, le débit de la pompe d'alimentation 50 et de la canalisation A étant calculésde façon qu'une pesée dure environ 2 minutes.

Le fluide de flottage formant fluide caloporteur tel que l'eau chaude déminéralisée est alors injecté et fait remonter le niveau de matériau fusible tel que de la cire fondue, lequel s'échappe par l'orifice de déversement 200, l'obturateur 203 ayant bien entendu été mis en position d'ouverture. Le ma tériau fusible fondu s'écoule alors dans le peson 4 par l'intermédiaire de la vanne 201. Dès que la masse de cire est atteinte, la fermeture des vannes 201 et 100 est alors commandée ainsi que l'arrêt de la pompe d'alimentation 50 et l'ouverture de la vanne de prélèvement de fluide 110, laquelle se refermera par commande automatique, parl'intermédiaire du logiciel sur déclenchement du détecteur de niveau 1100, ainsi que précédemment décrit dans la description.

En l'absence de rechargement en matériau fusible à l'état solide par l'intermédiaire des trous d'homme 1051 et 1052, ainsi que précédemment décrit, l'injection d'eau chaude sera de plus en plus importante, jusqu'à ce que le réservoir-four 1 ne contienne pratiquement plus de cire. Dès lors, le processus de fabrication peut être arrêté, le niveau de fluide étant ramené à son niveau le plus bas, le fluide de flottage étant reamené à température ambiante sensiblement et la cire restante ou matériau fusible, ramenée à l'état solide, un courant de fluide à température plus basse pouvant alors être engendré de façon à récupérer la pellicule de matériau solide excédentaire.

Dans le cas d'un travail en continu cependant ou avec un chargement en matériau fusible limité au volume distinct I, le volume intérieur II ne contient sensiblement que du matériau fusible fondu tel que de la cire et il n'y a pratiquement aucun risque de colmatage de l'orifice de débordement 200 par le matériau fusible à l'état solide ou par des particules de celui-ci.

On notera que lors du déclenchement du matériau fusible fondu ou liquide par l'orifice de débordement 200, le niveau de matériau fusible fondu remonte pratiquement jusqu'au haut du fondoir et du four du réservoir-four 1. Ceci a pour conséquence que les cires non fondues sont obligatoirement soumises à un enrobage dans la cire fondue et ce de manière systématique.

Bien entendu, à titre de variante de réalisation non limitative, le couvercle amovible 31 peut être remplacé par un couvercle amovible ne comportant pas de vérins 310, 311 ou d'orifices 3100, 3110, sans sortir du cadre de l'objet de la présente invention, le couvercle amovible étant dans ce cas globalement déplacé en translation pour assurer la fonction comparable à celle d'ouverture-fermeture des soupapes et vérins 310,311.

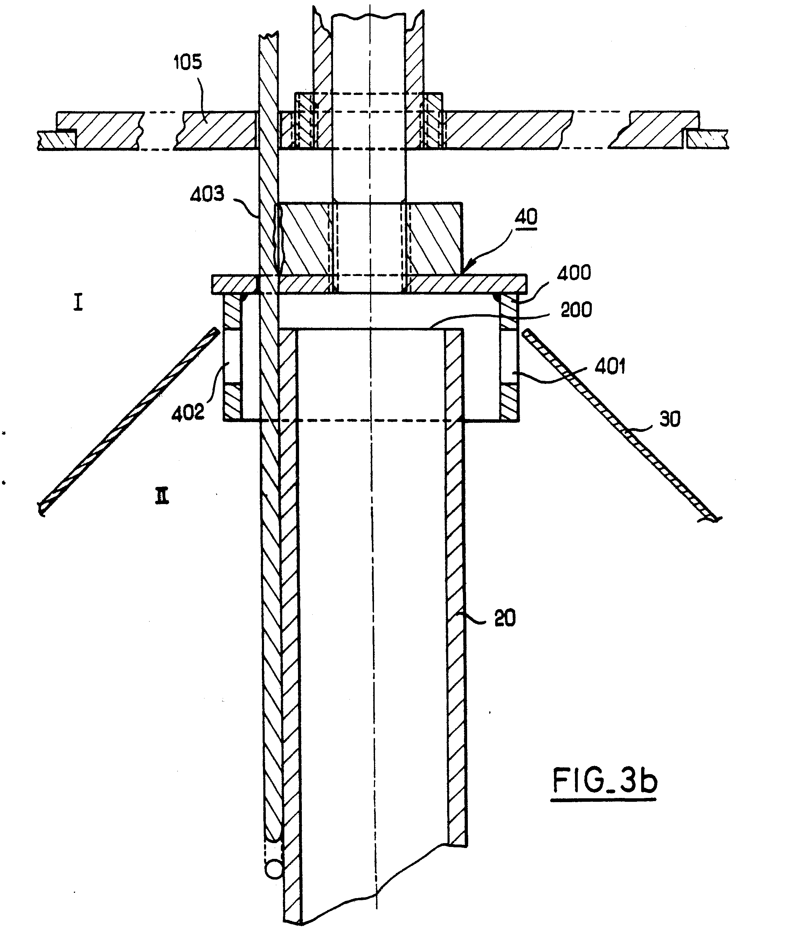

Un mode de réalisation avantageux, plus particulièrement adapté à la conduite du dosage de produits fusibles ou liquides en continu sera décrit en liaison avec les figures 3a et 3b.

Conformément à la figure 3a, l'élément 30 est de forme conique et repose sur les supports 103,104. Le cône constituant l'élément 30, présente une ouverture 300 selon une section droite circulaire du cône 30. Le couvercle amovible 31 du mode de réalisation précédent est avantageusement remplacé par un obturateur 40 engagé sur le tube traversant 20. L'orifice de débordement 200, constitué par une section du tube traversant 20, affleure au niveau de l'ouverture 300 du cône 30. L'obturateur 40 est engagé entre les parois du cône 30 et du tube traversant 20 et est mécaniquement solidaire de moyens d'entraînement 50 constitués par un vérin dont le corps de vérin est fixé à l'élément de fermeture 1050 du trou d'homme ménagé dans le couvercle 105. Les moyens d'entraînement 50 permettent, l'ouverte totale de l'ouverture 300, en position haute maximale de l'obturateur 40, la fermeture totale de l'ouverture 300 et de l'orifice de débordement 200, l'obturateur 400 étant amené à reposer sur le tube traversant 20 et le cône 30, sans exercer d'effort important, l'ouuverture de l'élément de fermeture 1050 lorsque, l'obturateur 40 prenant appui sur le cône 30 et le tube traversant 20,un effort est exercé par l'intermédiaire du vérin 50 lequel a pour effet de provoquer, par réaction, l'ouverture de l'élément de fermeture 1050. Les cires ou matériaux non fondus peuvent alors être introduits dans le fondoir-doseur. L'élément de fermeture 1050 est suffisamment pesant pour assurer, sur suppression de l'action du vérin 50, la fermeture de l'élément de fermeture 1050 par gravité.

Un détail de réalisation de l'obturateur 40 est représenté en figure 3b. Afin d'assurer un guidage convenable de l'obturateur dans son movement de translation sur action du vérin 50, des guides 403 sont prévus et forment glissière sur la paroi externe du tube traversant 20. En outre, les orifices latéraux 401, 402 sont prévus sur l'obturateur 40. Ils permettent, ainsi que représenté en figure 3b, d'assurer la mise en communication du volume intérieur II avec l'orifice de débordement 200, le volume intérieur I étant maintenu isolé de ces derniers.

Le mode de réalisation représenté en figures 3a et 3b est particulièrement avantageux en ce que, l'obturation s'effectuant au niveau de l'orifice de débordement 200, la vidange totale du tube traversant 20 peut être effectuée, ce qui permet d'obtenir une meilleure homogénéité des coulées, du point de vue du temps de mise en oeuvre séquentielle et de la nature du produit obtenu dans une conduite automatique du dosage.

On a ainsi décrit un fondoir-doseur présentant un haut degré de fiabilité en raison du risque pratiquement inexistant d'occultation ou de colmatage de l'orifice de débordement 200.

En outre, le fondoir-doseur objet de l'invention permet d'obtenir une accélération du temps de fonte pour un fondoir intégralement rempli par des matériaux fusibles non fondus tels que des cires.

En outre, il est possible de démarrer des pesées à partir d'un remplissage partiel excluant initialement le volume distinct I.

Selon une caractéristique particulièrement avantageuse, le fondoir-doseur objet de l'invention permet également d'assurer un écoulement du matériau fusible fondu avec une vitesse d'écoulement sensiblement constante pour un matériau de nature donnée. En effet, le système d'écoulement par débordement permet d'assurer une hauteur constante de la colonne de liquide constituée par le matériau fusible fondu, identique d'une pesée à l'autre. Cet élément particulièrement intéressant permet ainsi d'assurer des temps de mise en oeuvure pour chaque pesée sensiblement identique pour un matériau considéré. Cette caracté ristique permet en particulier d'obtenir des coulées particulièrement homogènes, tant du point de vue de la nature du produit obtenu, que des temps de mise en oeuvure séquentielle des différentes étapes permettant la fabrication ainsi que décrit dans la demande de brevet français no 85 02241 précédemment citée.

En outre, selon un aspect non négligeable particulièrement avantageux du fondoir-doseur objet de l'invention, un nettoyage à l'eau chaude des parois du réservoir-four 1 peut facilement être réalisé. Le volume d'eau chaude ou de fluide de flottage constituant fluide caloporteur est intégralement récupéré et peut provenir avantageusement de l'eau de production des crèmes ou émulsions ainsi que précédemment décrit.

En outre, l'adaptation de chargement en continu, ainsi qu'il a été mentionné précédemment dans la description, est particulièrement simple, la vitesse de fonte permettant d'imaginer des fondoirs réduits.

Bien que le fondoir-doseur précédemment décrit donne satisfaction et permette un fonctionnement convenable, il comporte cependant un certain nombre de servitudes.

Dans le cas où le fondoir-doseur est insuffisamment garni de cires fondues le peson doseur, récepteur des cires fondues, ne fait pas de discrimination entre la cire puis l'eau de prélèvement par débordement, laquelle vient alors remplir ce dernier. Ceci implique donc l'existence d'un contacteur haut actionné par un flotteur pour éviter de tels incidents. De même, il est nécessaire de prévoir l'existence d'un contacteur bas de manière à fermer la vanne de vidange d'eau sans laisser passer les cires fondues.

L'installation de plusieurs fondoirs-doseurs, c'est-à-dire un par cire, installation nécessaire pour la production de produits pharmaceutiques complexes dans lesquels de nombreux composants entrent en jeu, nécessite une réserve d'eau chaude importante située à un niveau inférieur à celui des fondoirs-doseurs pour permettre le retour de l'eau après chargement du peson par débordement. En outre, l'alimentation successive de chaque fondoir-doseur implique la présence de deux vannes automatiques par fondoir-doseur ainsi qu'une tuyauterie importante pour l'alimentation et le retour de l'eau de chauffage.

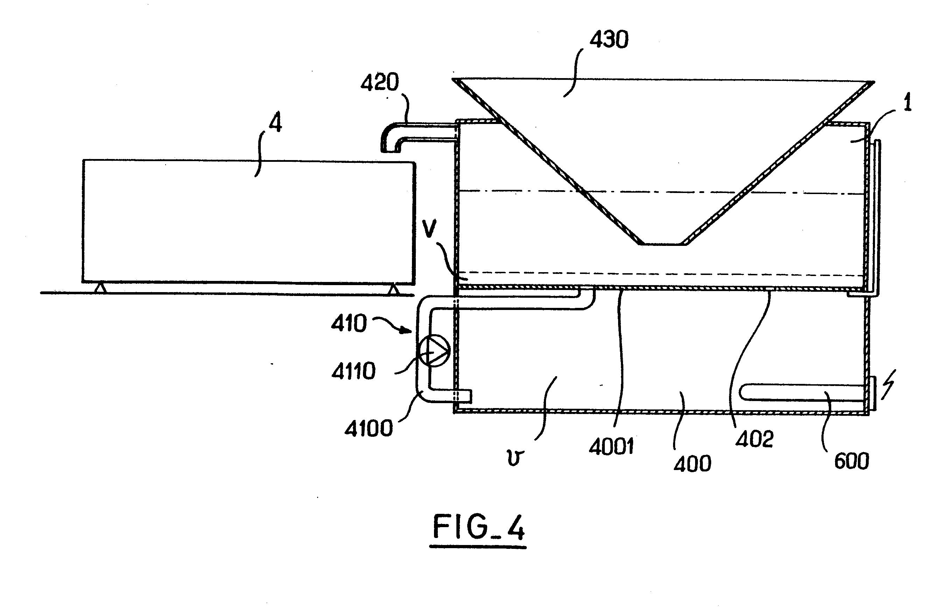

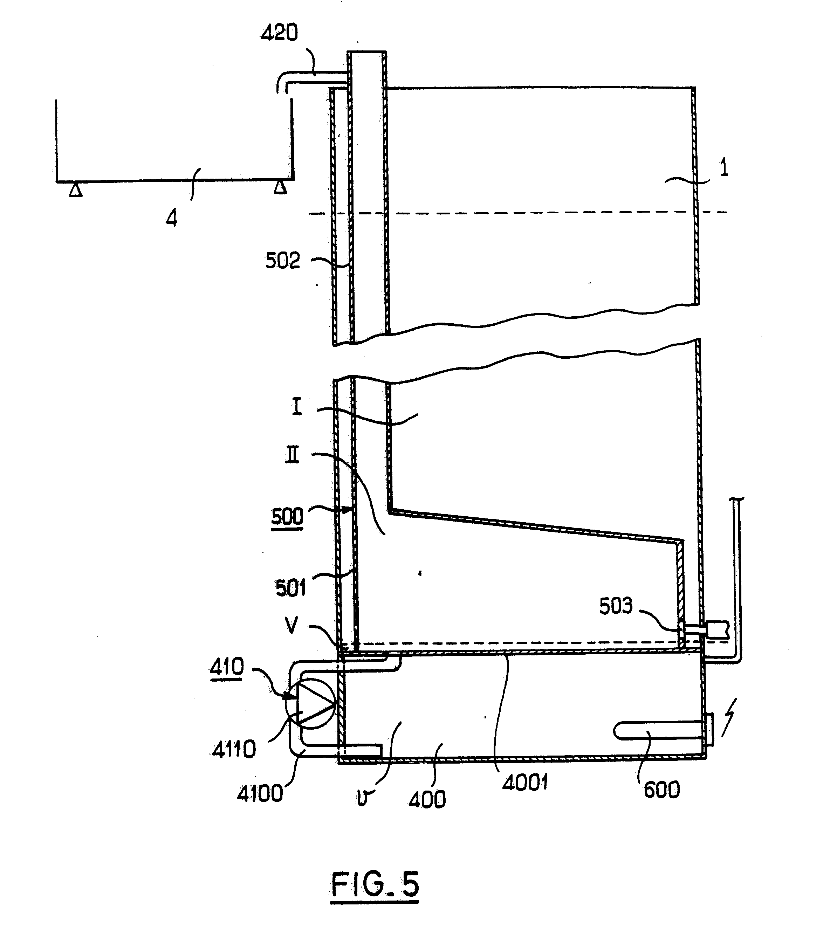

Le présent mode de réalisation a pour objet un perfectionnement du fondoir-doseur décrit précédemment permettant la mise en oeuvure de fondoirs-doseurs de construction beaucoup plus simple et beaucoup moins onéreuse. Le fondoir-doseur pour matériau fusible ou liquide ci-après décrit en liaison avec les figures 4 et 5 est remarquable en ce que les moyens de prélèvement par débordement du matériau fusible fondu sont constitués par un réservoir d'eau chaude contenant l'eau de chauffage du fondoir-doseur, le réservoir étant disposé à la base du réservoir-four, et par les moyens d'alimentation du réservoir-four en eau de chauffage. Les moyens d'alimentation permettent l'amenée de l'eau de chauffage, de manière temporaire, dans le réservoir four, à la base de ce dernier.

Le fondoir-doseur dans le mode de réalisation précité sera décrit de manière détaillée selon deux variantes de réalisations avantageuses non limitatives.

Ainsi qu'on l'a représenté sur la figure 4 précitée, et conformément à un aspect particulièrement avantageux du fondoir-doseur selon l'invention, les moyens 2 de prélèvement par débordement du matériau fusible fondu sont constitués par un réservoir d'eau chaude 400 contenant l'eau de chauffage du fondoir-doseur. Le réservoir 400 est disposé à la base du réservoir-four 1. Des moyens d'alimentation 410 du réservoir-four en eau de chauffage sont également prévus, ces moyens d'alimentation permettant l'amenée de l'eau de chauffage de manière temporaire dans le réservoir-four 1 à la base de ce dernier.

Ainsi qu'on l'a également représenté en figure 4, le réservoir-four 1 comporte à sa partie supérieure une buse 420 constituant la partie terminale, des moyens de prélèvement par débordement. Bien entendu, le volume du réservoir d'eau chaude 400 est inférieur au volume utile du réservoir four 1, le volume utile du réservoir-four 1 étant défini par le volume compris entre la base de la partie terminale des moyens de prélèvement par débordement, c'est-à-dire la buse 420, et la paroi de séparation notée 4001 du réservoir four 1 et du réservoir d'eau chaude 400.

Ainsi qu'on le remarquera en outre sur la figure 4, le volume V d'eau de chauffage contenu dans le fondoir-doseur est supérieur au volume du réservoir d'eau chaude 400 volume noté v sur cette même figure.

Selon un mode de réalisation non limitatif représenté en figure 4, les moyens d'alimentation du réservoir four 1 en eau de chauffage comprennent une conduite notée 4100 mettant en communication le réservoir d'eau de chauffage 400 et le réservoir-four 1 par l'intermédiaire d'une pompe d'alimentation 4110. En outre, un orifice permanent noté 402 permet la mise en communication du réservoir-four 1 et du réservoir d'eau chaude de chauffage 400 au travers de la paroi de séparation 4001 du réservoir-four 1 et du réservoir d'eau de chauffage 400.

Afin d'empêcher l'occultation de la partie terminale 420 des moyens 2 de prélèvement par débordement, le fondoir-doseur objet de l'invention comporte également au niveau du réservoir-four 1 des moyens de protection notés 430. Ces moyens de protection 430 permettent d'empêcher l'occultation des moyens de prélèvement par débordement et en particulier de la partie terminale 420 de ceux-ci par le matériau fusible non fondu. De manière avantageuse, les moyens de protection 430 forment une trémie. ces moyens de protection 430 peuvent avantageusement présenter une forme tronconique ainsi que représentée sur la figure 1 précitée.

Le fonctionnement du fondoir-doseur objet de l'invention représenté en figure 4 est le suivant.

Le principe consistant à faire remonter le niveau du matériau fondu tel que la cire ou une huile par de l'eau chaude est conservé mais, avantageusement, l'eau utilisée à cet effet est ici l'eau de chauffage du fondoir contenue dans le réservoir 400.

La remonté de l'eau de chauffage vers le réservoir four 1 est assurée par l'intermédiaire de la pompe 4110 et du tuyau 4100 tandis que le retour de l'eau est automatique par l'ouverture permanente 402. Bien entendu, le débit de la pompe 4110 et du tuyau 4100 est supérieur au débit de l'ouverture permanente 402.

A titre d'exemple non limitatif selon un mode de réalisation avantageux, pour une pompe 4110 présentant un débit de 40 litres par minute, le retour permanent par l'orifice permanent 402 est effectué à raison de 10 litres par minute et le fondoir-doseur pr l'intermédiaire de la buse 420 permet alors de débiter 30 litres de cire fondue par minute. La buse 420 permet ainsi d'alimenter un fondoir peson noté 4 lequel se trouve alors pratiquement au même niveau.

Ainsi qu'on l'a représenté en figure 4, afin de donner une représentation complète du fondoir-doseur objet de l'invention, des moyens de chauffage de l'eau de chauffage sont prévus et notés 600.

Un autre mode de réalisation particulièrement avantageux du fondoir-doseur selon le mode de réalisation précité plus particulièrement destiné à assurer le préchauffage de fluides tels que des huiles, ce préchauffage étant rendu nécessaire par le degré de viscosité de celle-ci, sera donné en liaison avec la figure 5.

Dans le cas précité, le réservoir-four 1 comporte avantageusement des moyens 500 de séparation du fluide soumis à prélèvement par débordement.

Les moyens de séparation 500 précités comportent avantageusement une partie 501 en forme de cloche dont la base est solidaire, de manière étanche, de la paroi de séparation 4001 du réservoir-four 1 et du réservoir d'eau de chauffage 400. Une partie tubulaire notée 502 est également prévue, cette partie tubulaire étant ouverte à son extrémité supérieure. La partie tubulaire 502 précitée prolonge la partie en cloche 501 et est reliée à la partie terminale constituée par la buse 420 des moyens de prélèvement par débordement. La partie en forme de cloche 501 et la partie tubulaire 502 subdivisent ainsi le volume du réservoir-four 1 en un premier volume réservoir I et en un deuxième volume de prélèvement par débordement II. Bien entendu, les deux volumes précités, volume I et volume II sont en communication par l'intermédiaire d'une vanne notée 503. La vanne 503 commandée par l'opérateur de manière manuelle ou même automatique, permet ainsi d'assurer l'alimentation à discrétion du volume II constituant le volume de prélèvement par débordement. Le principe de fonctionnement du fondoir-doseur tel que représenté en figure 5 est sensiblement identique à celui représenté en figure 1 l'eau de chauffage contenue dans le réservoir d'eau de chauffage 400 étant alors amenée dans le volume constitué par la partie en forme de cloche 501. L'arrivée de l'eau dans cette partie en cloche a pour effet de provoquer la remontée de l'huile dans la partie tubulaire 502 laquelle sera prélevée par débordement au niveau de la buse 420 des moyens de prélèvement par débordement. L'alimentation du fondoir peson 4 est alors ainsi assurée.

La vanne 503 peut avantageusement être pilotée en fonction du niveau de l'eau de chauffage dans l'évent déterminant l'ouverture de cette dernière tandis que la mise en route de la pompe 4110 entraîne la fermeture de la vanne 503 précitée. Bien entendu, le volume V d'eau de chauffage est alors supérieur au volume du réservoir d'eau de chauffage 400 le niveau du volume V étant choisi de façon que celui-ci soit compris entre l'ouverture de la vanne 503 et la paroi 4001 de séparation du réservoir d'eau de chauffage 400 du réservoir four 1.

Le mode de réalisation du fondoir-doseur précédemment décrit en relation avec la figure 5 est particulièrement avantageux pour le chauffage et la distribution des huiles.

En effet, certaines huiles demandent à être préchauffées en raison de leur viscosité, par exemple l'huile d'avocat, ou tout simplement parce que utilisées massivement dans une émulsion fabriquée à chaud leur chauffage dans le fondoir-peson prolonge la mobilisation de l'installation.

Par ailleurs, l'huile de paraffine par exemple, peu coûteuse à la raffinerie, revient finalement cher à la mise en oeuvre car elle est envoyée en fût perdu, les contrôles physico-chimiques obligatoires étant très onéreux et touchant de très petit lot.

La livraison par camion citerne et le stockage dans des conteneurs volumineux s'impose au plan-économique.

Dans ce but, le réservoir-four 1 peut avantageusement constituer conteneur de grande capacité pour la conservation des huiles précitées.

Indépendamment du problème de chauffage, de tels conteneurs sont trop lourds pour les disposer à un niveau supérieur par rapport au fondoir-peson 4 afin d'assurer le soutirage par gravimétrie. En outre, l'obtention d'un niveau constant par l'eau entraînerait, soit une trop grosse consommation pour un travail en eau perdue, dans le cas du mode de réalisation précédent, soit une installation spécifique importante pour récupérer cette eau.

L'application du principe utilisé que est décrit en liaison avec la figure 5 permet de résoudre l'ensemble des problèmes précités.

Bien entendu, ce système peut être réalisé sous la forme représentée en figure 5 dans le cas d'un conteneur principal pour réduire la surface au sol de l'installation mais il est également tout à fait possible de rendre ce système indépendant. De même, en l'absence de chauffage il est possible de n'utiliser qu'un segment de conteneur pour obtenir le volume réduit.

Le fondoir-doseur tel que décrit précédemment s'intègre parfaitement dans un dispositif de fabrication d'émulsion tel que décrit dans la demande de brevet français no 85 02241 mais peut bien entendu être utilisé en toute indépendance.

En outre, et de façon non limitative, le fondoir-doseur objet de l'invention peut parfaitement être adapté à la délivrance de produits fluides et légers ne nécessitant pas de fonte ou de chauffage afin de maintenir la fluidité du matériau considéré.

**Revendications**

1. Fondoir-doseur pour matériau fusible ou liquide comportant un réservoir-four (1) permettant de chauffer ledit matériau pour amener celui-ci à l'état fondu ou liquide, caractérisé en ce que ledit réservoir-four (1) comprend :
- une buse d'admission (1) et une buse de prélèvement (11) d'un fluide de flottage du matériau fusible ou liquide, lesdites buses (10,11) étant disposées à la base dudit réservoir-four (1),
- des moyens (2) de prélèvement par débordement dudit matériau fusible fondu ou liquide,
- des moyens (3) de protection desdits moyens (2) de prélèvement par débordement permettant d'empêcher l'occultation de ces derniers par le matériau fusible non fondu.

2. Fondoir-doseur selon la revendication 1, caractérisé en ce que la buse d'admission (10) et la buse de prélèvement (11) du fluide de flottage comportent une électro-vanne (100,110) permettant la commande d'admission respectivement de prélèvement du fluide de flottage.

3. Fondoir-doseur selon la revendication 1, caractérisé en ce que lesdits moyens (2) de prélèvement par débordement dudit matériau fusible fondu ou liquide comprennent un tube traversant ledit réservoir-four, ledit tube traversant (20) comportant en sa partie supérieure un orifice de débordement (200) permettant l'écoulement dudit matériau fusible fondu ou liquide dans ledit tube traversant (20), ledit tube traversant (20) étant muni, à l'extérieur du réservoir four (1) d'une électrovanne de commande (201) d'établissement ou d'arrêt d'écoulement du matériau fusible fondu ou liquide pour assurer, par gravité, le prélèvement selon la quantité souhaitée, l'extrémité opposée du tube traversant étant munie d'un obturateur (203) susceptible de permettre l'obturation de l'orifice de débordement.

4. Fondoir-doseur selon la revendication 3, caractérisé en ce que ledit tube (20) est connecté à un peson (4) ou à une cuve formant réservoir tampon pour le matériau fusible fondu ou liquide prélevé.

5. Fondoir-doseur selon la revendication 1, caractérisé en ce que lesdits moyens (3) de protection des moyens de prélèvement (2) comportent :
- un élément (30) sensiblement tronconique, en forme de cloche, rendu solidaire de la paroi interne du réservoir-four (1) par des supports (103,104), ledit élément tronconique (30) étant ouvert à sa partie supérieure et permettant de subdiviser le volume interne dudit réservoir-four (1) en un premier I et un deuxième II volume distincts délimités respectivement par la paroi interne du réservoir-four (1), le niveau (N) du fluide de flottage et la paroi externe de l'élément (30) sensiblement tronconique, et par la paroi interne de ce même élément tronconique (30) et le niveau du fluide de flottage,
- un couvercle amovible (31) destiné à occulter la partie supérieure ouverte de l'élément tronconique (30), ledit couvercle (31) comportant des soupapes ou évents (310,311) susceptibles d'être commandés par des vérins, ledit couvercle (31) présentant une partie centrale rapportée (312) destinée, lorsque le couvercle (31) est monté sur le tube traversant à in clure l'orifice de débordement (200) dans ledit deuxième volume distinct (II).

6. Fondoir-dosseur selon la revendication 5, caractérisé en ce que ledit couvercle (31) monté sur le tube traversant (20) est fixé à celui-ci au niveau de sa partie centrale rapportée par l'intermédiaire d'un écrou (313).

7. Fondoir-doseur selon les revendications 3,4,5 et 6, caractérisé en ce que ledit réservoir four (1) comporte à sa partie supérieure un couvercle (105) de fermeture, ledit couvercle de fermeture (105) étant muni d'une part, d'un trou d'homme central dont l'élément de fermeture (1050) constitue le support des tiges de vérin (310,311) actionnant les soupapes du couvercle amovible (31) de l'élément tronconique (30), ledit élément de fermeture (1050) étant engagé sur l'extrémité du tube traversant (20) et, d'autre part, deux trous d'homme périphériques (1051,1052).

8. Fondoir-doseur selon l'une des revendications 5 à 7, caractérisé en ce que l'élément sensiblement tronconique (30) et le couvercle amovible (31) sont constitués en un matériau tel que l'acier inoxydable ou un matériau plastique dur tel le polychlorure de vinyl (PVC).

9. Fondoir-doseur selon l'une des revendications précédentes, caractérisé en ce que le fluide de flottage est un fluide caloporteur, la température dudit fluide admis dans le réservoir-four (1) étant voisine de la température de fusion dudit matériau fusible.

10. Fondoir-doseur selon la revendication 9, caractérisé en ce que ledit fluide est constitué par de l'eau déminéralisée injectée à partir d'un réservoir (5) et d'une pompe d'alimentation (50).

11. Fondoir-doseur selon l'une des revendications précédentes, caractérisé en ce que le réservoir-four (1) comporte un flotteur (1000) indicateur du niveau supérieur du matériau fusible fondu ou liquide.

12. Fondoir-doseur selon l'une des revendications 1 à 11 précédentes, caractérisé en ce que le réservoir-four (1) comporte en outre en détecteur (1100) du niveau de séparation matériau fusible fondu ou liquide - fluide de flottage, ledit détecteur (1100) étant susceptible de commander la fermeture de l'électro-vanne (110) de prélèvement du fluide de flottage, lors d'un abaissement correspondant dudit niveau de séparation.

13. Fondoir-doseur selon la revendication 1, caractérisé en ce que lesdits moyens (2) de prélèvement par débordement dudit matériau fusible fondu sont constitués par :
- un réservoir d'eau chaude (400) contenant l'eau de chauffage dudit fondoir-doseur, ledit réservoir étant disposé à la base du réservoir-four (1),
- des moyens (410) d'alimentation dudit réservour four (1) en eau de chauffage, lesdits moyens d'alimentation permettant l'amenée de l'eau de chauffage, de manière temporaire, dans le réservoir four (1), à la base de ce dernier.

14. Fondoir-doseur selon la revendication 13, caractérisé en ce que ledit réservoir four (1) comportant à sa partie supérieure une buse (420) constituant la partie terminale desdits moyens de prélèvement par débordement, le volume du réservoir d'eau chaude (400) est inférieur au volume utile du réservoir four (1).

15. Fondoir-doseur selon la revendication 13, caractérisé en ce que le volume (V) d'eau de chauffage contenu dans le fondoir-doseur est supérieur au volume du réservoir d'eau chaude (v).

16. Fondoir-doseur selon la revendication 13, caractérisé en ce que lesdits moyens d'alimentation dudit réservoir four (1) en eau de chauffage comprennent :
- une conduite (4100) mettant en communication ledit réservoir d'eau de chauffage (400) et ledit réservoir four (1) par l'intermédiaire d'une pompe d'alimentation (4110),
- un orifice permanent (402) permettant la mise en communication dudit réservoir four (1) et de réservoir d'eau chaude de chauffage (400).

17. Fondoir-doseur selon la revendication 13, caractérisé en ce que ledit réservoir four (1) comporte des moyens de protection (430) de la partie terminale (420) des moyens (2) de prélèvement par débordement permettant d'empêcher l'occultation de ces derniers par le matériau fusible non fondu, lesdits moyens de protection (430) formant trémie.

18. Fondoir-doseur selon la revendication 17, caractérisé en ce que lesdits moyens de protection (430) formant trémie sont de forme tronconique.

19. Fondoir-doseur selon la revendication 13, caractérisé en ce que dans le cas de fondoirs-doseurs destinés à assurer le préchauffage de fluides tels que des huiles, ledit réservoir four (1) comporte des moyens (500) de séparation du fluide soumis à prélèvement par débordement.

20 Fondoir-doseur selon la revendication 19, caractérisé en ce lesdits moyens (500) de séparation comportent :
- une partie (501) en forme de cloche dont la base est solidaire de manière étanche de la paroi de séparation (4001) du réservoir four (1) et du réservoir d'eau de chauffage (400),
- une partie tubulaire (502) ouverte à son extrémité supérieure, prolongeant la partie en cloche, ladite partie tubulaire (502) étant reliée à la partie terminale (420) desdits moyens de prélèvement par débordement, la partie en cloche (501) et la partie tubulaire (502) subdivisant le volume dudit réservoir four (1) en un premier volume réservoir (I) et un deuxième volume de prélèvement par débordement (II), les deux volumes (I) et (II) étant en communication par l'intermédiaire d'une vanne (503).

21. Fondoir-doseur selon la revendication 13, caractérisé en ce que le réservoir d'eau de chauffage (400) est situé à un niveau inférieur à celui du fondoir-peson récepteur (4), la partie terminale (420), des moyens de prélèvement par débordement (2) affleurant la partie supérieure du réservoir four (1) et du fondoir-peson récepteur (4).

FIG_1

0275225

# FIG_2a

VERS PESON

0275225

FIG. 2b

0275225

FIG. 3a

0275225

FIG_3b

FIG_4

0275225

0275225

FIG. 5

Office européen des brevets

# RAPPORT DE RECHERCHE EUROPEENNE

Numero de la demande

EP 88 40 0069

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 235 348 (H.A. WITCHER)<br>* Figure 1, colonne 1, lignes 10-17; colonne 2, ligne 56 - colonne 3, ligne 39 *<br>--- | 1,2 | B 01 J 4/00<br>B 01 J 6/00<br>F 27 D 3/14<br>B 01 F 3/08<br>B 01 F 15/04<br>G 01 F 11/00 //<br>A 61 K 9/10 |
| A | FR-A-2 359 635 (DZERZHINSKY FILIAL VSESOJUZNOGO NAUCHNO-ISSLEDOVATELSKOGO I KONSTRUKTORSKOGO INSTITUTA KHIMICHESKOGO MASHINOSTROENIA)<br>* Page 1, lignes 1-7; page 3, ligne 37 - page 4, ligne 38; figure 2 *<br>--- | 1,3 | |
| A | FR-A-2 403 547 (CONLOC GmbH)<br>* Page 1, lignes 1-10; page 9, ligne 28 - page 12, ligne 6; figures 1,2 *<br>--- | 1,3 | |
| A,D | FR-A-2 577 438 (P. WENMAEKERS)<br>----- | | |

### DOMAINES TECHNIQUES RECHERCHES (Int. Cl.4)

B 01 J
B 01 F
G 01 F

Le présent rapport a été établi pour toutes les revendications

| Lieu de la recherche | Date d'achèvement de la recherche | Examinateur |
|---|---|---|
| LA HAYE | 18-02-1988 | VAN IDDEKINGE R.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)